# EUROPEAN PATENT SPECIFICATION

(11) **EP 0 930 827 B1**
(45) Date of publication and mention of the grant of the patent: **19.12.2001**
(21) Application number: 97939058.0
(22) Date of filing: 05.09.1997
(51) Int. Cl.: A23K 1/00

(54) **ANIMAL FEEDSTUFFS**
TIERFUTTER
ALIMENTS POUR ANIMAUX

(30) Priority: 05.09.1996 GB 9618511
(43) Date of publication of application: 28.07.1999
(73) Proprietor: MOBIL OIL COMPANY LIMITED, Central Milton Keynes, Buckinghamshire MK9 1ES (GB)
(72) Inventor: MABILLE, Sylvain Marcel Clément, F-92500 Rueil-Malmaison (FR); WENNINGTON, Jacqueline, Buckinghamshire MK18 1GT (GB)
(74) Representative: Jones, Helen Marjorie Meredith
(86) International application number: GB9702407
(87) International publication number: WO9809538

(56) References cited:
- EP-A- 0 520 890
- EP-A- 0 658 313
- FR-A- 2 180 638
- GB-A- 1 022 793
- GB-A- 1 460 179
- GB-A- 2 139 868
- US-A- 4 075 325
- US-A- 4 666 522

## Description

This invention relates to animal feeds; more particularly, this invention relates to pelleted animal feedstuffs; and to processes for their preparation.

In modern animal husbandry, it is customary to provide livestock with pelleted animal feed. This may be a mineral compound which can comprise a compounding of several mineral components intended to furnish part or all of the mineral requirement (including trace element requirement) of the animal; or a nutritive compound which can comprise a compounding of several protein, fat and/or carbohydrate components (such as cereals, pulses, vegetable oils or animal fats); or a compound providing a complete balanced diet including vitamins and trace elements (for example, for domestic and battery reared livestock). The feed may also be medicated feed. In the preparation of such pelleted animal feed, the components are generally comminuted together; then blended with an aqueous medium and a binding agent; and pelletised to form a pelleted animal feed.

In current such processes, however, there are problems in the preparation, handling, storage and use of such animal feeds. Thus, often the blend lacks sufficient lubricity and this can lead to sticking of product to, and wear of, the pelleting press. Furthermore, some pellets, especially those containing fats, can lack cohesiveness. Also, it is important, but difficult to regulate the percentage moisture content of the pellets if the content is too high there is a risk of mould developing on the animal feed; if, however, the moisture content is too low there is an increase in the level of fines. Fines lead to an increased amount of silo cleaning; furthermore, livestock tends to avoid fines and, in consequence, this represents wasted feed and lost investment.

Hitherto, it has been the practice to incorporate minerals (such as bentonite, kaolinite, vermiculite or calcium aluminate) or organic materials (such as lignosulphates or gums) but none has proved entirely satisfactory.

GB 2123690 discloses devices, which may be pelleted, which can furnish part of the mineral requirement of livestock.

US-A-4 075 325 discloses a mixture of heated wax and comminuted feed-material and an emulsion formed thereof by vigourous agitation and addition of an emulsifyer.

The present invention seeks to provide animal feeds which yield reduced amount of fines and improved cohesiveness and which meet moisture content requirements.

According, therefore, to one aspect of the present invention, there is provided a process for the preparation of a pelletised animal feed which process comprises:
(i) blending the feed components, in comminuted form;
(ii) adding an aqueous wax emulsion thereto;
(iii) controlling the water content of the mixture from (ii) so that it comprises up to 10 wt % of the mixture; and
(iv) extruding the product from (iii) as pellets.

The term "feed components" as used herein is intended to cover all such components as might lawfully be included in an animal feed. Thus, the term includes not only basic nutritive components including one or more proteins, lipids and/or carbohydrates (such as vegetable seeds, including cereals and pulses; vegetable oils; animal fats and permitted slaughterhouse residues) but also mineral components (including trace elements such as magnesium; iron; iodine; copper; cobalt; manganese; zinc and selenium). It may also include pharmaceuticals, for prophylaxis as well as therapy, such as nematicides and fungicides. Fungicides may also be incorporated to prevent mould occurring on the pellet. The invention is of most utility in the preparation of mineral feed compositions, that is compositions which may include nutritive components but consist primarily of mineral components.

In the process of the present invention, the feed components, as received, may be in the form of bulk raw material (for example, seeds) which need to be comminuted, for example by grinding. This may be done by grinding the components individually or, preferably, by blending such components in the desired quantity; and then comminuting the blend. Where one or more of the feed components (for example, mineral powders) is received as a powder it or they may be added to the comminuted blend (where present); and, where more than one such component is present, it may be desirable to effect a preliminary blending of the powders.

Either subsequently or, preferably, simultaneously any liquid components of the feed are added to the comminuted blend in the blender. These components can include vegetable oils, animal fats and amino acids.

An important aspect of this invention is the addition to the feed components, suitably as a blend from step (i) of an aqueous wax emulsion thereto, as binding agent. The wax may, in principle, be any petroleum-derived wax, suitably a paraffinic wax, or a petrolatum, especially one having a viscosity from 4 to 15 cSt at 100°C. It is preferred that a paraffinic wax is a paraffinic hydrogenated oil, a microcrystalline wax or a synthetic (e.g. Fischer-Tropsch) wax. However, in many territories, it will be necessary for the resulting animal feed to satisfy the requirements of a regulatory agency (e.g. the US F&DA) and/or legislation (e.g. EC Directive 94/40). Thus, in the EU it is required that for human food trade consumption, a wax should have a viscosity (cSt at 100°C) of at least 11; an average carbon chain content, at the 5% boiling point of at least 25; and an average molecular weight of at least 500. It is, therefore, preferred that the wax is a fully refined microcrystalline wax. An example found to be entirely satisfactory is MOBILWAX 2365 as supplied by Mobil Oil Company Limited. The product is further characterised as follows:

| **CHARACTERISTICS** | **TEST METHOD** | **SPECIFICATION** | | |
|---|---|---|---|---|
| | | **MIN** | **TYP** | **MAX** |
| Penetration (Needle; 25°C; 1/10 mm) | ASTM D 1321 | 22 | 26 | 30 |
| Mineral Oil (% wt) | ASTM D 721 | | 3 | 3.5 |
| Drop Melting Point (°C) | ASTM D 127 | 76 | 78 | 80 |
| Viscosity (cSt at 100°C) | ASTM D 445 | 12.5 | 13.5 | |

Food grade petrolatums such as those meeting the US provisions of 21CFR 573.720 or equivalent may alternatively be used.

Whatever the nature of the wax, it is essential, in accordance with the present invention, that it be incorporated into the animal feed as an aqueous emulsion. The aqueous emulsion preferably has a nominal solids content from 35 to 65 wt % preferably from 40 to 60 wt %. The emulsion may contain other components desired to be present in the pelletised feed, for instance nutrients or minerals or, conveniently preservatives for instance to prolong the storage life of the pellets.

The aqueous emulsion may be prepared, in a manner known *per se,* by adding the components of the stabiliser package, suitably a non-ionic or colloid-based emulsifier system, to the wax or the aqueous phase, suitably at a temperature from 80° to 90°C; adding the oil phase to the aqueous phase; and then homogenising the mixture by applying high pressure (for example, 15-20 mPa (150 to 200 bar) in a homogeniser.

The wax emulsion may be added with any liquid components of the feed; it may suitably be added in an amount from 0.25 to 7 wt %, preferably from 0.5 to 5 wt % of the mixture.

Thereafter, the water content of the mixture from step (ii) is checked and, if required further water is added either as liquid or, less preferably, as steam. Steam may be desirable where the feed mix is for a nutritive feed or other products which require minimal added water for pelletisation.

The aqueous produce from step (iii) is then extruded, for example in a press, to form green pellets which are then cooled, screened and stocked.

This invention further provides the use of a wax, as binder, in the production of pelletised animal feed preferably wherein the wax is present as an aqueous wax emulsion. The use of the emulsion in the invention has the effect of improving pellet cohesion, reducing fines and increasing lubricity of the mix, reducing stickiness during manufacture and wear of the press. This is exhibited by improved throughput through the pelletising process.

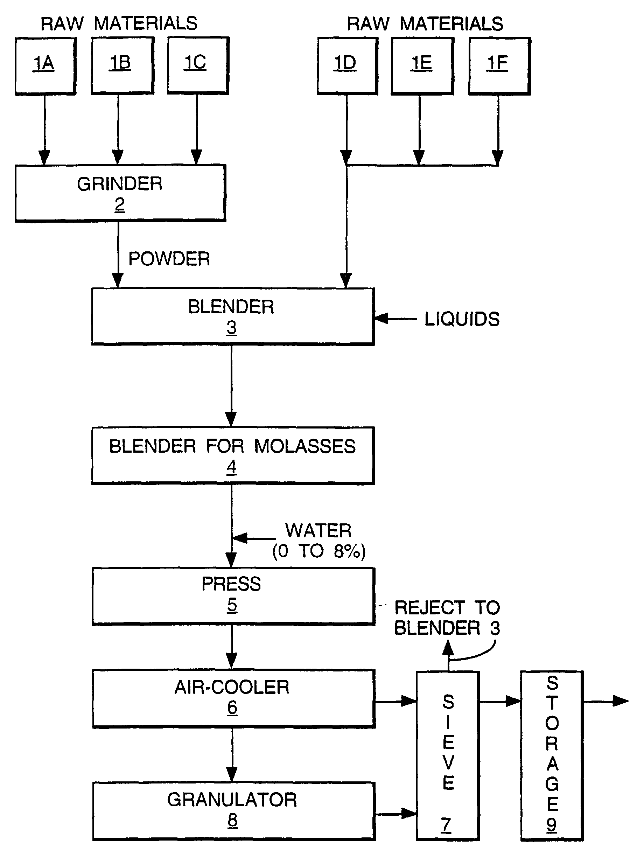

The invention will now be further illustrated, by way of example, with reference to the accompanying drawing in which:
the sole Figure represents a schematic flow chart of a compendious process in accordance with the invention.

Referring to the drawing, bulk raw materials (such as seeds) are metered from hoppers 1A, 1B, 1C in the required proportion to a grinder 2 and ground to a powder. Raw materials (such as mineral powders) are metered from hoppers 1D, 1E, 1F directly to blender 3. The powder from grinder 2 is also conveyed to the blender 3.

The aqueous wax emulsion, for instance comprising 52 wt % microcrystalline wax (MOBILWAX 2365) 3 wt % of sodium stearyl lactylate (ATLAS SSL) and 45 wt % softened water was prepared as described above. The aqueous wax emulsion is mixed with liquid raw materials (such as amino acids, fats and additives) and molasses where used in low amounts and this mixture is also conveyed to the blender 3. The product from blender 3 is then optionally transferred to blender 4 for mixing with molasses (where present in higher amounts). The product is next conveyed to a press 5 where it is extruded into green pellets which exit at about 75°C and are sent to an air-cooler 6. The pellets are screened in sieve 7 and, if necessary, sent to a granulator 8. The pelletised product is then stored 9.

The following Example illustrate the invention.

### EXAMPLE 1

Three blends were prepared as described above and having the compositions shown below in Table 1.

**TABLE 1**

| **BLEND/COMPONENTS*** | **BLEND 1 (wt %)** | **BLEND 2 (wt %)** | **BLEND 3 (wt %)** |
|---|---|---|---|
| Calcium carbonate | 40.7 | 40.2 | 39.4 |
| Dicalcium phosphate | 24.5 | 24.0 | 23.3 |
| Seeds (oil and protein) | 11.0 | 11.0 | 11.0 |
| Magnesium oxide | 7.5 | 7.5 | 6.5 |
| Cane molasses | 6.0 | 6.0 | 6.0 |
| Proprietary nutrient | 5.0 | 5.0 | 5.0 |
| Rape seed oil | 2.0 | | |
| Wax emulsion | | 3.0 | 6.0 |

| | | | |
|---|---|---|---|
| (* together with other, minor (2 wt %) additives) | | | |

Blend 1 is a conventional formulation; blends 2 and 3 are formulations which demonstrate the present invention using a wax emulsion. The emulsion was MOBILCER Q supplied by Mobil Oil Company Limited. Whilst this is not approved for food use, the physical properties of the wax are suitable for use in the invention and show the principle of the invention.

The following results shown in Table 2 were obtained from the pelletising process.

**TABLE 2**

| **BLEND/PROPERTY** | **BLEND 1** | **BLEND 2** | **BLEND 3** |
|---|---|---|---|
| Average amperage | 170 | 170 | 120 |
| Time in press | 25' | 23'45" | 23' |
| Feeding level of press | 6 | 6.5 | 8 |
| Durability (on day, HOLMEN) | 86.5 | 88.8 | 82.4 |
| Durability (+ 24h, HOLMEN) | 86.3 | 89.8 | 82 |
| Durability (+ 8 days, HOLMEN) | 78.2 | 87.5 | 74.2 |

The durability results suggest that, at an emulsion loading of 3 wt %, the durability of the prepared pellets is initially equal to that of the conventional formulation and improves steadily, relative to that of the conventional formulation, over a period of 8 days. It is also observed that the blends in accordance with the present invention are prepared with a reduced cycle time, a higher throughput but consume less energy than is the case with the conventional formulation.

The use of the emulsion is found to facilitate the reduction of fines and increased cohesion of pelleted animal feedstuffs; the regulation of moisture rate; improved lubrication during pelleting and the enhanced retention of flavour.

### EXAMPLE 2

An emulsion of 52% by weight Mobilwax 2365 (microcrystalline wax) 3% by weight sodium stearyl lactylate (Atlas SSL) and 45% softened water was prepared using the general technique described above. That emulsion and, as reference, MobilcerQ emulsion, are is used in a process as illustrated in the figure with emulsion added at the liquid component addition step for two different proprietary mineral feed mixes, at respective amounts of 3.7 and 2.6% by weight of the total mix. The emulsion replaced about 50% of the water used in the basic formulation in each case.

Where MobilcerQ was used in these amounts for these proprietary mixes the flow rate through the pelletising apparatus can be increased from 1.5 to 2.4 t/h for the first mix and from 2.5 to 40 t/h for the second mix, indicating improved lubrication without other parameters being changed. Equivalent improvements are expected with the food grade wax.

## Claims

1. A process for the preparation of a pelletised animal feed, which process comprises:
(i) blending the feed components, in comminuted form;
(ii) adding an aqueous wax emulsion thereto;
(iii) controlling the water content of the mixture from (ii) so that it comprises up to 10 wt % of the mixture; and
(iv) extruding the product from (iii) as pellets.

2. A process according to claim 1 wherein the feed components comprises a nutritive component, a mineral component and/or a pharmaceutical.

3. A process according to claim 1 or 2 wherein the wax is derived from petroleum.

4. A process according to claim 1 or 2 wherein the wax comprises a paraffinic hydrogenated oil, a microcrystalline wax, a petrolatum wax or a synthetic wax.

5. A process according to any preceding claim wherein the wax comprises a microcrystalline wax.

6. A process according to any preceding claim wherein the aqueous wax emulsion has a solids content from 35 to 65 wt % of the emulsion.

7. A process according to any preceding claim wherein the aqueous wax emulsion is added in amount from 0.25 to 7 wt % of the mixture.

8. A process according to any preceding claim in which additional water is added to the mixture in step III as a liquid.

9. The use of aqueous wax emulsion as binder, in the improvement in lubricity of the mixture in the production of pelletised animal feed.

## Patentansprüche

1. Verfahren zur Herstellung eines granulierten Tierfutters, wobei das Verfahren umfaßt:
(i) Mischen der Futterbestandteile in zerkleinerter Form,
(ii) Zugeben einer wäßrigen Wachsemulsion,
(iii) Kontrollieren des Wassergehalts der Mischung von (ii), so daß er bis zu 10 Gew.-% der Mischung ausmacht, und
(iv) Extrudieren des Produktes von (iii) als Granulat.

2. Verfahren nach Anspruch 1. wobei die Futterbestandteile eine Nährstoffkomponente, eine Mineralkomponente und/oder ein Arzneimittel umfassen.

3. Verfahren nach Anspruch 1 oder 2, wobei das Wachs von Erdöl stammt.

4. Verfahren nach Anspruch 1 oder 2, wobei das Wachs ein gehärtetes Parrafinöl, ein mikrokristallines Wachs, ein Petromatumwachs oder ein synthetisches Wachs umfaßt.

5. Verfahren nach einem der vorstehenden Ansprüche, wobei das Wachs ein mikrokristallines Wachs umfaßt.

6. Verfahren nach einem der vorstehenden Ansprüche, wobei die wäßrige Wachsemulsion einen Feststoffgehalt von 35 bis 65 Gew.-% der Emulsion hat.

7. Verfahren nach einem der vorstehenden Ansprüche, wobei die wäßrige Wachsemulsion in einer Menge von 0,25 bis 7 Gew.-% der Mischung zugesetzt wird.

8. Verfahren nach einem der vorstehenden Ansprüche, wobei der Mischung im Schritt III weiteres Wasser als Flüssigkeit zugesetzt wird.

9. Verwendung einer wäßrigen Wachsemulsion als Bindemittel bei der Verbesserung des Gleitvermögens einer Mischung bei der Herstellung eines granulierten Tierfutters.

## Revendications

1. Un procédé de préparation d'un aliment pour animaux en granulés, procédé qui comprend les étapes consistant à :
(i) mélanger les composants alimentaires, sous forme réduite en poudre ;
(ii) y ajouter une émulsion aqueuse de cire ;
(iii) ajuster la teneur en eau du mélange de (ii) de sorte qu'elle constitue jusqu'à 10 % en poids du mélange ; et
(iv) extruder le produit de (iii) sous forme de granulés.

2. Un procédé selon la revendication 1, dans lequel les composants alimentaires comprennent un composant nutritif, un composant minéral et/ou un produit pharmaceutique.

3. Un procédé selon la revendication 1 ou 2, dans lequel la cire est dérivée du pétrole.

4. Un procédé selon la revendication 1 ou 2, dans lequel la cire comprend une huile paraffinique hydrogénée, une cire microcristalline, une cire de pétrole ou une cire synthétique.

5. Un procédé selon l'une quelconque des revendications précédentes, dans lequel la cire comprend une cire microcristalline.

6. Un procédé selon l'une quelconque des revendications précédentes, dans lequel l'émulsion aqueuse de cire a une teneur en matières solides de 35 à 65 % en poids de l'émulsion.

7. Un procédé selon l'une quelconque des revendications précédentes, dans lequel l'émulsion aqueuse de cire est ajoutée dans une proportion de 0,25 à 7 % en poids du mélange.

8. Un procédé selon l'une quelconque des revendications précédentes, dans lequel de l'eau supplémentaire est ajoutée au mélange dans l'étape III sous forme liquide.

9. L'utilisation d'une émulsion aqueuse de cire en tant que liant pour améliorer l'onctuosité du mélange dans la production d'un aliment pour animaux en granulés.
